# EUROPÄISCHE PATENTSCHRIFT

(11) **EP 0 934 219 B1**
(45) Veröffentlichungstag und Bekanntmachung des Hinweises auf die Patenterteilung: **13.12.2000**
(21) Anmeldenummer: 97944722.4
(22) Anmeldetag: 17.09.1997
(51) Int. Cl.: B65G 59/10

(54) **VORRICHTUNG ZUM VEREINZELN VON DOSENDECKELN MIT SPERRMESSER SOWIE VERFAHREN ZUM ZEITWEISEN VERMEIDEN DER VEREINZELUNG**
DEVICE FOR SEPARATING CAN LIDS WITH A BLOCKING BLADE, AND METHOD OF INTERMITTENTLY PREVENTING SEPARATION
DISPOSITIF POUR SEPARER DES COUVERCLES DE BOITES COMPORTANT UNE LAME DE BLOCAGE ET PROCEDE POUR EVITER TEMPORAIREMENT UNE SEPARATION

(30) Priorität: 20.09.1996 DE 19638604
(43) Veröffentlichungstag der Anmeldung: 11.08.1999
(73) Patentinhaber: Maiko Engineering GmbH, 38112 Braunschweig (DE)
(72) Erfinder: POLITT, Hans-Dietrich, D-38271 Baddeckenstedt (DE)
(74) Vertreter: Olgemöller, Luitgard, Dr.
(86) Internationale Anmeldenummer: DE9702094
(87) Internationale Veröffentlichungsnummer: WO9812130

(56) Entgegenhaltungen:
- US-A- 3 741 410
- US-A- 4 288 003
- US-A- 4 441 630

## Beschreibung

Die vorliegende Erfindung betrifft ein Sperrmesser, eine Vorrichtung zum Vereinzeln von Deckeln, die anschließend einem Behälterkörper zugeführt werden sollen, um diesen zu verschließen, sowie ein Verfahren zum Zeitweisen Vermeiden der Vereinzelung der Deckel.

Beim Vereinzeln von Dosendeckeln wird meist (siehe z.B. US-A-3 741 410) ein Abteilmesser benötigt, das z.B. ein um eine zentrische Achse drehbares Abteilmesser mit einer Scheibe sein kann, auf deren Außenrand ein Dosendeckel-Stapel tangential gelagert ist. Von einer ersten, etwas höheren Auflagefläche gleitet der Deckelstapel beim Drehen des Abteilmessers auf eine Fläche, die etwa um die Größenordnung tiefer liegt, die dem höhenmäßigen Platzbedarf eines Deckels in diesem Stapel entspricht. Beim Weiterdrehen greift eine Abteil-Schneidkante zwischen dem untersten Deckel und dem nächsthöheren Deckel ein und schiebt den letzteren auf eine Fläche, die wiederum das ursprüngliche Niveau aufweist. Der ursprünglich unterste Deckel wird gleichzeitig über eine unter der Abteil-Schneide gelegene Schnecke nach unten wegtransportiert, um einem Dosenkörper zugeführt zu werden. Bei der nächsten Umdrehung wiederholt sich dieser Bewegungsablauf mit dem zuvor zweituntersten Deckel, nun als unterstem Deckel, und so fort.

In der Clinchstation (oder einer anderen Einrichtung zum Deckelauflegen) wird jeder Deckel auf einen dort ebenfalls automatisch antransportierten Behälterrumpf aufgelegt und ggf. aufgeclincht. Falls in der automatischen Zufuhr der Behälter ein Behälter fehlt, ist es notwendig, die Zufuhr des entsprechenden Deckels zu stoppen, um einen fehlerhaften Deckelauflage- bzw. Clinchvorgang zu vermeiden, der zum Abschalten der Maschine führen würde. Deshalb ist es erforderlich, die Vereinzelungsvorrichtung mit einer Sperreinrichtung zu versehen, die automatisch die Zufuhr weiterer Deckel sperrt, wenn keine Behälter in die Clinchstation oder dgl. eingefahren werden. Eine solche Sperrvorrichtung besitzt eine Sperrklinke, die vorgeschoben wird, um das Trennmesser abzudecken, solange der Deckelauflageeinrichtung keine Dosenkörper zugeführt werden. Beim Einfahren der Sperrklinke zwischen die nur locker aufeinanderliegenden Dosendeckel wird häufig statt des Spaltes ein Dosendeckel selbst getroffen, so daß es zu Verformungen, zumindest jedoch zu Beschädigungen des Lacks kommt. Die Folgen sind fehlerhafte Dosen; im schlimmeren Falle läßt sich der Deckel nicht mehr sauber auf den Dosenbehälter aufbringen, so daß es zu Störungen in der Clinchstation oder dgl. und zum Abschalten der Maschine kommt.

**Aufgabe** der vorliegenden Erfindung ist es, eine Vorrichtung zum Vereinzeln von Dosendeckeln bereitzustellen, die eine Sperrvorrichtung aufweist, welche die Dosendeckel nicht beschädigen kann, sowie ein Verfahren, das die obigen Nachteile vermeidet.

Die Aufgabe wird durch die Bereitstellung eines Sperrmessers gemäß Anspruch 1, einer Vorrichtung gemäß Anspruch 7, sowie einem Verfahren gemäß Anspruch 10 gelöst.

Das Sperrmesser ist um eine Achse (100) drehbar gelagert. Es muß eine Drehbewegung aus einer Ruhestellung A (in der die Deckelvereinzelung stattfinden kann) in eine Sperrstellung B (in der die Vereinzelung verhindert wird) und vice versa ausführen können. Die beiden Stellungen sind üblicherweise nicht weiter als 120° voneinander entfernt. Die Drehbewegung wird vorzugsweise dadurch realisiert, daß Mittel zum Umsetzen eines linearen Antriebs in eine Drehbewegung um die Achse (100) vorgesehen sind. Alternativ kann die Drehbewegung auch direkt über die Achse (100), z.B. mit Hilfe einer Welle, erzeugt werden.

Damit der normale Ablauf der Vereinzelung ungestört stattfinden kann, weist das Sperrmesser seitlich eine Ausnehmung auf, durch die der Deckelstapel hindurchragt, während sich das Sperrmesser in Ruhestellung befindet. Mindestens eine der beiden Seitenkanten der Ausnehmung besitzt die Form einer Messerschneide (7), läuft also keilförmig spitz zu. Zum Absperren einer weiteren Deckelzufuhr (z.B. bei einer Störung der Behälterkörperzufuhr) wird das Sperrmesser um einen bestimmten Winkel, z.B. um 60° bis 80° (meist nicht mehr als 120°; der Winkel hängt von der Größe der Ausnehmung ab) gedreht, so daß der äußere Teil der Scheibe mit dem größeren Radius (R) mit der spitzen Seitenkante voran als "Sperrklinke" zwischen den untersten und den zweituntersten Deckel des Stapels geschoben wird. Damit wird das Nachrutschen weiterer Deckel in das Abteilmesser verhindert, auch wenn dieses weiter rotiert.

Die Absperrung erfolgt erfindungsgemäß also durch ein tangentiales Angreifen der Sperrklinke des Sperrmessers, wodurch die Deckel auch dann beschädigungsfrei auseinandergeschoben werden, wenn die angreifende Sperrklinke nicht genau in den Zwischenraum zwischen zwei Deckeln zielt.

Bevorzugte Ausgestaltungen der Erfindung sind in den Unteransprüchen angegeben.

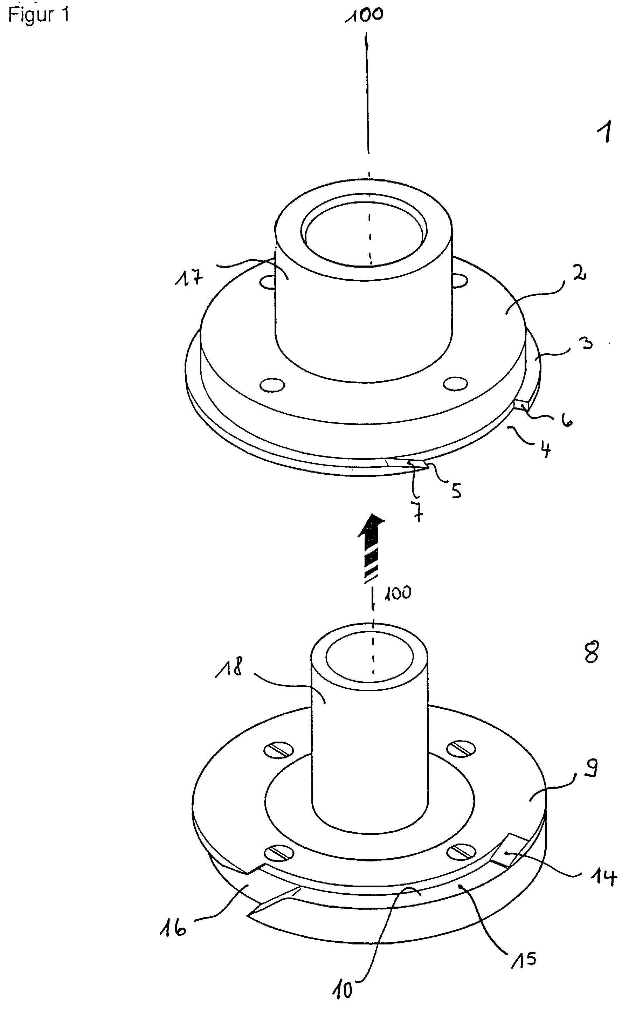

Durch die Figuren wird die Erfindung beispielhaft näher erläutert, wobei **Figur 1** ein Sperrmesser 1 sowie ein Abteilmesser 8 zeigt. Das Sperrmesser 1 besitzt kreisförmige Scheiben 2 und 3, die in diesem Beispiel an einem Hohlzylinder 17 befestigt sind. Der Hohlzylinder 17 hat eine lichte Weite, die so bemessen ist, daß er über einen Hohlzylinder 18 des Abteilmessers 8 geschoben werden kann. Das Sperrmesser besitzt (nicht gezeigte) Mittel zum Umsetzen eines linearen Antriebs in eine Drehbewegung um die Achse 100, die in beide Richtungen ausführbar ist.

Die Ausnehmung 4 besitzt in diesem Sperrmesser eine Größe, die z.B. für längliche oder ovale Dosendeckel wie solche für Fischdosen geeignet ist. Die Größe ist so bemessen, daß die Dosendeckel, wenn sie auf dem äußeren Segment des Abteilmessers 8 (mit einer radialen Tiefe etwa der Ausnehmung 10) aufliegen, durch die Ausnehmung 4 hindurch ragen, ohne deren Seitenkanten 5 und 6 zu berühren. Die Seitenkante 5 ist keilförmig spitz zulaufend ausgebildet, so daß sie die Form 7 einer Messerschneide besitzt.

Das Abteilmesser 8 besitzt eine kreisförmige Scheibe 9 mit demselben Durchmesser wie ihn die größere Scheibe 3 des Sperrmessers aufweist. Über den Hohlzylinder 18 läßt es sich mit einer Welle oder dergleichen verbinden, so daß es um die Achse 100 drehbar gelagert ist. Im Betrieb rotiert das Messer gegen den Uhrzeigersinn. Dabei rutscht der jeweils unterste Dosendeckel eines Dosendeckelstapels vom äußeren Segment der Fläche der Scheibe 9 über die Schräge 14 auf die tieferliegende Fläche 15 der Ausnehmung 10 und von da in die schneckenartige Ausnehmung 16, durch die er in Richtung Deckelauflagestation geführt wird. Gleichzeitig rutscht der nächste Deckel auf die Oberfläche der Scheibe 9.

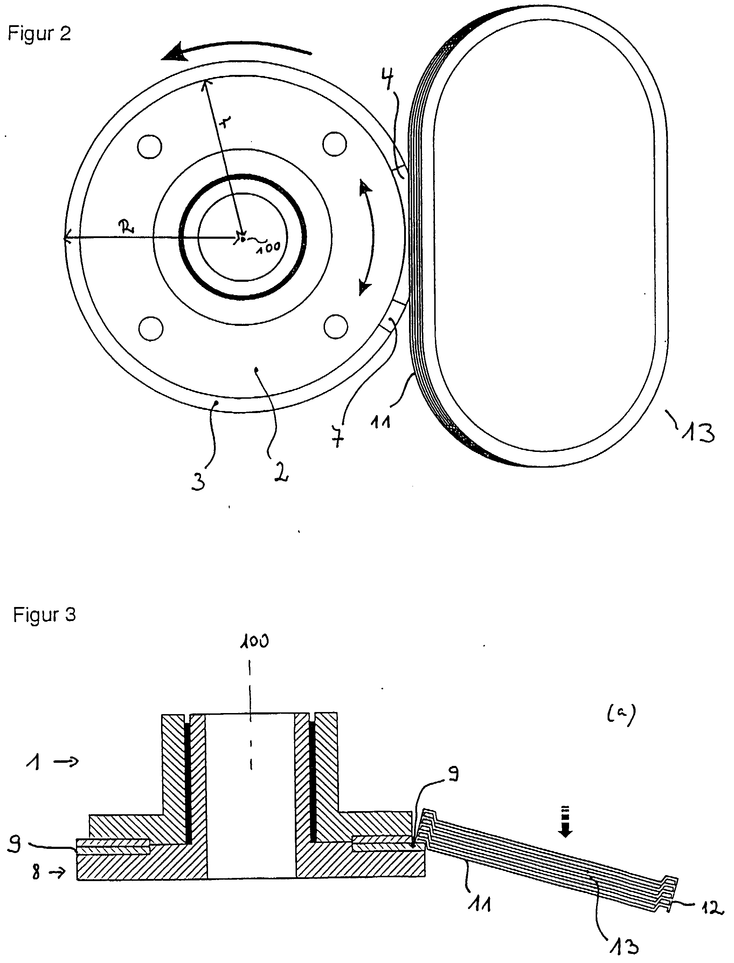

**Figur 2** gibt einen schematischen Blick von oben auf das auf dem Abteilmesser angeordnete Sperrmesser, wobei die Dosendeckel in der gezeigten Stellung in der Ausnehmung 4 des Sperrmessers liegen. (Der in den Ansprüchen gebrauchte Ausdruck "tangential" soll nicht nur, wie hier gezeigt, mit einer geraden Längskante anliegende Deckel umfassen, sondern auch solche mit einer weniger oder mehr gekrümmten Kante, z.B. für - ggf. angenähert - elliptische oder kreisförmige Deckel) In dieser Position findet die Deckelvereinzelung statt. Zum Absperren wird die Messerschneide 7 in Richtung des Dosendeckelstapels 13 gefahren. Man erkennt deutlich, daß die Messerschneide 7 tangential zwischen die Deckel im Deckelstapel eingreift.

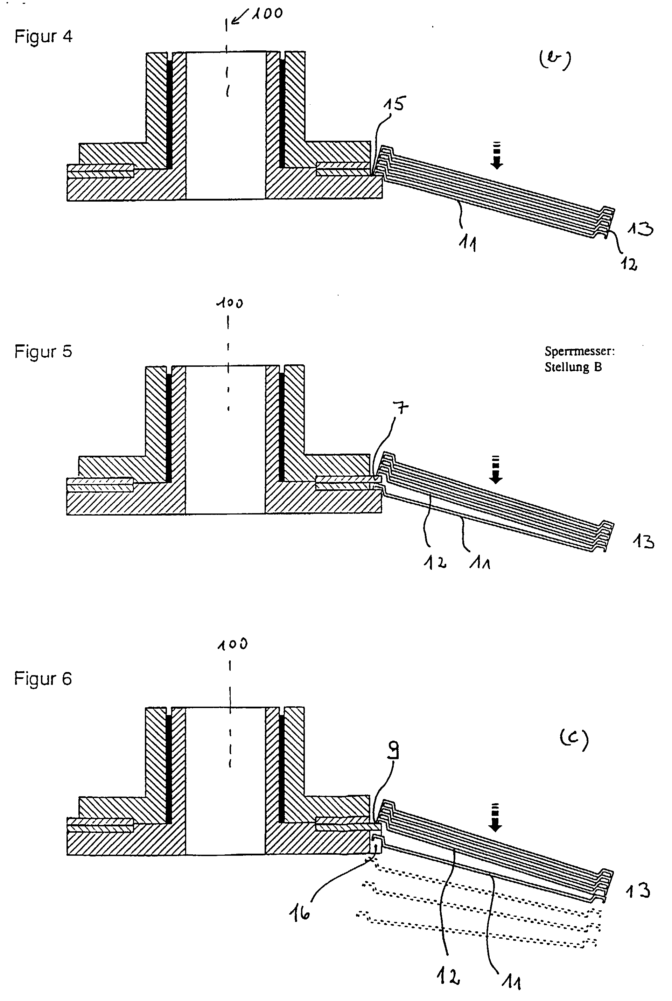

Die **Figuren 3 bis 6** erläutern das erfindungsgemäße Verfahren, das sich insbesondere mit der erfindungsgemäßen Vorrichtung durchführen läßt. Dabei zeigt Figur 3 den Dosendeckelstapel 13, der auf dem höheren Niveau der Scheibe 9 des Abteilmessers, und zwar auf dessen äußerem Segment, aufliegt. In Figur 4 sieht man, wie der unterste Deckel mitsamt dem auf ihm liegenden Deckelstapel auf die Auflagefläche 15 der Ausnehmung 10 transportiert wird, die das oben erwähnte niedrigere Niveau (in der Größenordnung tiefer, die der Höhe eines Dosendeckels im Stapel entspricht) aufweist. Bei unbehindert fortschreitender Vereinzelung wird anschließend gemäß Figur 6 der unterste Deckel über eine Schnecke 16 im Abteilmesser 8 nach unten wegbefördert, während der nächstobere Deckel wieder auf dem höheren Niveau der Scheibe 9 des Abteilmessers 8 zu liegen kommt. Wenn die Vereinzelung unterbrochen werden soll, schiebt sich die Messerschneide 7 zwischen die Deckel 11 und 12 des Deckelstapels 13 (in Figur 5 dargestellt), so daß der nächsthöhere Deckel nicht auf die Oberfläche 9 des Abteilmessers rutschen kann.

## Patentansprüche

1. Sperrmesser zum zeitweisen Vermeiden der Vereinzelung von Dosendeckeln mit einer ersten, um eine Achse (100) drehbar angeordneten, kreisförmigen Scheibe (2) mit einem Radius (r), sowie einer zweiten, ebenfalls um die Achse (100) drehbar angeordneten, kreisförmigen Scheibe (3), wobei die Scheibe (3) über den größeren Teil ihres Umfangs einen größeren Radius (R) aufweist als die erste Scheibe und über einen kleineren Teil ihres Umfangs eine Ausnehmung (4) mit einer radialen Tiefe von etwa (R-r) über die gesamte Dicke und derartige Abmessungen in Umfangsrichtung besitzt, daß ein zu vereinzelnder Dosendeckel (11) tangential in dieser Ausnehmung liegen kann, ohne daß er mit den Kanten (5,6) der Ausnehmung in Berührung kommen muß, wobei eine der beiden Kanten (5 oder 6) des größeren Teils zur Ausnehmung hin nach Art einer Messerschneide (7) ausgebildet ist.

2. Sperrmesser nach Anspruch 1, worin die erste kreisförmige Scheibe (2) Mittel zum Umsetzen eines linearen Antriebs in eine Drehbewegung um die Achse (100) aufweist.

3. Sperrmesser nach Anspruch 1 oder 2, worin die zweite Scheibe (3) eine Dicke in der Größenordnung des Platzbedarfes eines Dosendeckels in einem Stapel aufeinanderliegender Dosendeckel (13) aufweist.

4. Sperrmesser nach einem der voranstehenden Ansprüche, worin die beiden Scheiben (2) und (3) einstückig ausgebildet sind.

5. Sperrmesser nach einem der Ansprüche 1 bis 3, worin die beiden Scheiben (2) und (3) lösbar miteinander verbunden sind.

6. Sperrmesser nach einem der voranstehenden Ansprüche, worin die erste kreisförmige Scheibe (2) eine axiale Ausdehnung aufweist, die 0 oder etwa das 1- bis 5-fache der Dicke der zweiten kreisförmigen Scheibe (3) beträgt.

7. Vorrichtung zum Vereinzeln von Dosendeckeln mit einem Sperrmesser (1) nach einem der Ansprüche 1 bis 6 und einem Abteilmesser (8), wobei das Abteilmesser (8) benachbart zur zweiten Scheibe (3) des Sperrmessers (1) eine um die selbe Achse (100) drehbar angeordnete, kreisförmige Scheibe (9) besitzt, deren Radius (R') gleich ist mit dem oder größer ist als der Radius (R) der zweiten Scheibe (3) des Sperrmessers (1), und die an ihrer zur zweiten Scheibe (3) des Sperrmessers hin weisenden Seite eine Ausnehmung (10) mit einer radialen Tiefe von ungefähr (R'-r) und in Axialrichtung einer Dicke in der Größenordnung des Durchmessers der zweiten Scheibe (3) des Sperrmessers (1) aufweist, deren Abmessungen in Umfangsrichtung gleich oder größer sind als die der Ausnehmung (4) der zweiten Scheibe (3) des Sperrmessers (1), wobei die Ausnehmung (10) der Scheibe (9) in ihrem in Drehrichtung hinteren Teil in eine schneckenartige Ausnehmung (16) mündet, derart daß die zur Ausnehmung gerichtete Kante eine Abteil-Schneide ausbildet.

8. Vorrichtung nach Anspruch 7, worin diejenige Kante (14) der Ausnehmung (10) der Scheibe (9), die im Drehsinn der Achse (100) der messerartigen Kante (7) der zweiten Scheibe (3) entgegengesetzt ist, abgeflacht ausgebildet ist.

9. Vorrichtung nach Anspruch 8, worin das Abteilmesser (8) in einer Richtung um die Achse (100) drehbar und das Sperrmesser (1) um die Achse (100) hin- und herbewegbar angeordnet sind.

10. Verfahren zum zeitweisen Vermeiden der Vereinzelung von Dosendeckeln mit Hilfe einer Vorrichtung aus einem Sperrmesser (1) und einem Abteilmesser (8), wobei das Vereinzeln die folgenden Abschnitte umfaßt:
(a) der unterste Deckel (11) eines Dosendeckelstapels (13) liegt tangential auf dem äußeren Teil einer kreisförmigen, sich um eine senkrechte Achse (100) gleichmäßig drehenden Scheibe (9) eines Abteilmessers (8) auf,
(b) derselbe Deckel (11) wird auf eine Auflagefläche (15) des Abteilmessers (8) befördert, die um die Größenordnung tiefer liegt, die dem Platzbedarf eines Deckels in einem Stapel aufeinanderliegender Deckel (13) entspricht,
(c) der unterste Deckel (11) wird über eine Schnecke (16) im Abteilmesser (8) nach unten weg befördert,
(a') der nächst obere Deckel (12) kommt als neuer unterster Deckel (11) tangential auf dem äußeren Teil der kreisförmigen, sich um die senkrechte Achse (100) drehenden Scheibe (9) des Abteilmessers (8) zu liegen,
dadurch gekennzeichnet, daß
- zum Vermeiden der Vereinzelung weiterer Dosendeckel die messerförmig ausgebildete Kante (7) eines Sperrmessers (1) aus einer Ruhestellung A heraus kreisbogenförmig in den Spalt zwischen dem Deckel (11) und dem nächst oberhalb liegenden Deckel (12) eingreift (Stellung B), während der Deckelstapel gemäß (b) auf der Auflagefläche (15) aufliegt, derart, daß nach der Wegbeförderung des untersten Deckels (11) gemäß (c) das Nachrutschen des nächsten Deckels (12) gemäß (a') bzw. (a) wirksam verhindert wird, und
- zur Wiederaufnahme der Vereinzelung die messerförmig ausgebildete Kante auf demselben Kreisbogen in die Ruhestellung A zurückbewegt wird.

## Claims

1. Stop knife for temporarily avoiding the isolation of can lids comprising a first circular disk (2), being rotationally arranged about an axis (100) and having a radius r, and a second circular disk (3), being also rotationally arranged about said axis (100), wherein said disk (3), over the major part of its periphery, has a greater radius (R) than the first disk and, over a minor part of its periphery, comprises a recess (4) having a radial depth of about (R-r) over the entire thickness and being dimensioned in circumferential direction in such a manner that a can lid (11) to be isolated can tangentially rest in said recess without contacting the edges (5, 6) of the recess, wherein one of the two edges (5 or 6) of the major part is shaped towards the recess in the nature of an edge of a knife.

2. Stop knife according to claim 1, wherein the first circular disk (2) comprises means for converting a linear actuation into a rotational movement about the axis (100).

3. Stop knife according to claim 1 or 2, wherein the second disk (3) has a thickness in the order of magnitude of the space requirement of one can lid in a stack of superimposed can lids (13).

4. Stop knife according to any one of the preceding claims, wherein the two disks (2) and (3) are integrally formed.

5. Stop knife according to any one of claims 1 to 3, wherein the two disks (2) and (3) are releasably connected to each other.

6. Stop knife according to any one of the preceding claims, wherein the first circular disk (2) has an axial extension of 0 or approx. 1 to 5-times the thickness of the second circular disk (3).

7. Device for isolating can lids comprising a stop knife (1) according to any one of claims 1 to 6 and a dividing knife (8), wherein the dividing knife (8), adjacent to the second disk (3) of the stop knife (1), comprises a circular disk (9) being rotationally arranged about the same axis (100), the radius (R') of which being equal to or greater than the radius (R) of the second disk (3) of the stop knife (1), and which disk (9) comprises, at its side facing the second disk (3) of the stop knife, a recess (10) having a radial depth of approx. (R'-r) and having, in axial direction, a thickness in the order of magnitude of the cross-section of the second disk (3) of the stop knife (1), the dimensions of which, in circumferential direction, being equal to or greater than those of the recess (4) of the second disk (3) of the stop knife (1), wherein the recess (10) of the disk (9) in its in rotational direction rear part terminates in a screw-like recess (16) such that the edge facing the recess forms a dividing edge.

8. Device according to claim 7, wherein that edge (14) of the recess (10) of the disk (9), which in the sense of rotation of the axis (100) is opposed to the knife-like edge (7) of the second disk (3), has a flat shape.

9. Device according to claim 8, wherein the dividing knife (8) is arranged to be rotated in one direction about the axis (100) and the stop knife (1) is arranged to be moved forth and back about the axis (100).

10. Method for temporarily avoiding the isolation of can lids by means of a device comprised of a stop knife (1) and a dividing knife (8), wherein the isolation comprises the following steps:
(a) the undermost lid (11) of a can lid stack (13) tangentially rests on the outer part of a circular disk (9) of a dividing knife (8), which is uniformly rotating about a vertical axis (100),
(b) the same lid (11) is transported to a supporting surface (15) of the dividing knife (8), which is located deeper by a magnitude corresponding to the space requirement of one lid in a stack of superimposed lids (13),
(c) the undermost lid (11) is transported away downwards via a screw (16) in the dividing knife (8),
(a') the next upper lid (12) comes to rest as the new undermost lid (11) tangentially on the outer part- of the circular disk (9) of the dividing knife (8) rotating about the vertical axis-(100),
characterized in that
- for avoiding the isolation of further can lids, the knife-like shaped edge (7) of a stop knife (1), from a starting position A, in the manner of an arc of a circle engages in the gap between the lid (11) and the next superimposed lid (12) (position B), while the lid stack in accordance with (b) rests on the supporting surface (15), such that after the undermost lid (11) has been transported away in accordance with (c) it is effectively prevented that the next lid (12) will in accordance with (a') or (a), respectively, slide in behind, and
- for resuming the isolation, the knife-like shaped edge is returned on the same arc of a circle to the starting position A.

## Revendications

1. Lame de blocage pour éviter temporairement la séparation de couvercles de boîtes, comportant une première plaque circulaire (2) agencée rotative autour d'un axe (100) et ayant un rayon (r) ainsi qu'une deuxième plaque circulaire (3) également agencée rotative autour de l'axe (100), le disque (3) ayant sur la plus grande partie de sa circonférence un plus grand rayon (R) que le premier disque et sur une plus petite partie de sa circonférence un évidement (4) qui a une profondeur radiale d'environ (R - r) sur toute l'épaisseur et des dimensions telles en direction circonférentielle qu'un couvercle de boîte à séparer (11) peut se trouver tangentiellement dans cet évidement sans être obligé de venir en contact avec les arêtes (5, 6) de l'évidement, l'une des deux arêtes (5 ou 6) de la plus grande partie étant conçue en direction de l'évidement comme un tranchant de lame (7).

2. Lame de blocage selon la revendication 1, dans laquelle le premier disque (2) comporte des moyens pour transformer un entraînement linéaire en un mouvement de rotation autour de l'axe (100).

3. Lame de blocage selon la revendication 1 ou 2, dans laquelle le deuxième disque (3) a une épaisseur de l'ordre de l'encombrement d'un couvercle de boîte dans une pile de couvercles de boîtes superposés (13).

4. Lame de blocage selon l'une des revendications précédentes, dans laquelle les deux disques (2) et (3) sont conçus d'un seul tenant.

5. Lame de blocage selon l'une des revendications 1 à 3, dans laquelle les deux disques (2) et (3) sont assemblés de manière à être amovibles.

6. Lame de blocage selon l'une des revendications précédentes, dans laquelle le premier disque (2) a une dimension axiale qui vaut 0 ou environ 1 à 5 fois l'épaisseur du deuxième disque (3).

7. Dispositif pour séparer des couvercles de boîtes comportant une lame de blocage (1) selon l'une des revendications 1 à 6 et une lame de détachement (8), la lame de détachement (8) ayant au voisinage du deuxième disque (3) de la lame de blocage (1) une plaque circulaire (9) qui est agencée rotative autour du même axe (100), dont le rayon (R') est supérieur ou égal au rayon (R) du deuxième disque (3) de la lame de blocage (1) et qui comporte sur son côté tourné vers le deuxième disque (3) de la lame de blocage un évidement (10) qui a une profondeur radiale d'environ (R' - r) et une épaisseur en direction axiale de l'ordre du diamètre du deuxième disque (3) de la lame de blocage (1) et dont les dimensions en direction circonférentielle sont supérieures ou égales à celles de l'évidement (4) du deuxième disque (3) de la lame de blocage (1), l'évidement (10) du disque (9) débouchant dans sa partie arrière dans le sens de rotation dans un évidement en hélice (16) de telle sorte que l'arête dirigée vers l'évidement forme un tranchant de séparation.

8. Dispositif selon la revendication 7, dans lequel celle (14) des arêtes de l'évidement (10) du disque (9) qui est en face dans le sens de rotation de l'axe (100) de l'arête en lame (7) du deuxième disque (3) est conçue aplatie.

9. Dispositif selon la revendication 8, dans lequel la lame de détachement (8) est agencée rotative dans une direction autour de l'axe (100) et la lame de blocage (1) est agencée mobile en va-et-vient autour de l'axe (100).

10. Procédé pour éviter temporairement la séparation de couvercles de boîtes à l'aide d'un dispositif constitué d'une lame de blocage (1) et d'une lame de détachement (8), dans lequel la séparation comprend les étapes suivantes :
(a) le couvercle le plus bas (11) d'une pile de couvercles de boîtes (13) se trouve tangentiellement sur la partie extérieure d'une plaque circulaire (9), tournant régulièrement autour d'un axe perpendiculaire (100), d'une lame de détachement (8),
(b) ce même couvercle (11) est transporté sur une surface d'appui (15) de la lame de détachement (8), laquelle surface d'appui est plus profonde de l'ordre de grandeur qui correspond à l'encombrement d'un couvercle dans une pile de couvercles superposés (13),
(c) le couvercle le plus bas (11) est transporté vers le bas par l'intermédiaire d'une hélice (16) située dans la lame de détachement (8),
(a') le prochain couvercle (12) au-dessus du précédent vient, en tant que nouveau couvercle le plus bas (11), se placer tangentiellement sur la partie extérieure du disque (9), tournant autour de l'axe perpendiculaire (100), de la lame de détachement (8),
caractérisé en ce que
- pour éviter la séparation d'un autre couvercle de boîte, l'arête conçue en forme de lame (7) d'une lame de blocage (1) vient, à partir d'une position de repos A, en décrivant un arc de cercle, s'insérer dans la fente entre le couvercle (11) et le prochain couvercle (12) se trouvant juste au-dessus (position B), tandis que la pile de couvercles repose selon (b) sur la surface d'appui (15), de telle sorte que, après l'éloignement du couvercle le plus bas (11) selon (c), le glissement du couvercle suivant (12) selon (a') ou (a) est efficacement empêché, et
- pour reprendre la séparation, l'arête conçue en forme de lame est ramenée selon le même arc de cercle dans la position de repos A.
